Europäisches Patentamt

(19) European Patent Office (11) Publication number: **0 078 124**

Office européen des brevets **B1**

# (12) EUROPEAN PATENT SPECIFICATION

(45) Date of publication of patent specification: **22.05.85**   (51) Int. Cl.⁴: **F 16 H 37/08**

(21) Application number: **82305392.1**

(22) Date of filing: **11.10.82**

⸻

(54) Vehicle transmission.

⸻

(30) Priority: **24.10.81 GB 8132124**

(43) Date of publication of application:
**04.05.83 Bulletin 83/18**

(45) Publication of the grant of the patent:
**22.05.85 Bulletin 85/21**

(84) Designated Contracting States:
**BE DE FR GB IT NL SE**

(56) References cited:
**FR-A-1 359 120**
**FR-A-1 464 924**
**US-A-2 152 796**
**US-A-2 446 462**
**US-A-3 439 563**

(73) Proprietor: **LEYLAND VEHICLES LIMITED**
**Lancaster House**
**Leyland Preston PR5 1SN Lancashire (GB)**

(72) Inventor: **Greenwood, Christopher John**
**30 Homestead**
**Bamber Bridge Preston Lancs (GB)**

(74) Representative: **Waters, Jeffrey et al**
**BL Patent and Trade Mark Department Cowley**
**Body Plant**
**Cowley Oxford OX4 5NL (GB)**

⸻

Courier Press, Leamington Spa, England.

## Description

This invention relates to vehicle transmissions, and particularly to those including continuously-variable-ratio transmissions of the toroidal race rolling traction type.

One such transmission is described in U.S. Patent No. 2152796 (R. Erban) taking for example the embodiment shown in Figure 7 of that specification. A simple epicyclic gear combines the overall transmission input (via a torque divider) with the output from a toroidal race-rolling traction transmission whose input it also connected to the overall transmission input (via the torque divider), the simple epicyclic providing a summed output to drive the vehicle. The output from the traction-type transmission to the simple epicyclic gear is taken via a negative 1:1 ratio gearset, i.e. the shafts rotate in opposite directions. This transmission operates smoothly between forward and reverse ratios, since with the simple epicyclic gear a geared neutral is possible, but it is limited to just one (a "low") range of ratios.

Transmissions providing both "low" and "high" regimes are described, for example, in prior art Document Paper No. 80-C2/DET-59 of the American Society of Mechanical Engineers. In these transmissions, neutral, reverse and slow forward are produced by combining a direct output from the vehicle engine with an indirect output taken via the continuously-variable-ratio transmission and reversed in sense. In this so-called 'low regime', as in U.S. No. 215796, the ratio of the continuously-variable-ratio transmission is varied to produce either a low range of reverse ratios, a low range of forward ratios, or geared neutral (in which the engine is rotating, but the continuously-variable-ratio transmission's output is rotating in the opposite sense and the combined output is zero). The faster forward range of ratios is produced by using the output of the continuously-variable-ratio transmission on its own (so called 'high regime').

A problem arises in combining the 'direct' and 'indirect' outputs for the low regime, in that to produce a desired maximum forward ratio in this regime it may be necessary to combine the 'direct' and 'indirect' outputs in an awkward ratio, because the particular continuously-variable-ratio transmission used will have an optimum range of speeds of operation, depending on roller diameter, and so will the particular power unit. Given that the speed ranges of the 'direct' and 'indirect' output are fixed, a particular maximum forward ratio, and hence particular maximum combined output speed, can only be met for one particular ratio of combination.

The invention provides a transmission system which comprises an input shaft for connection to an engine output shaft, a rolling traction toroidal race continuously-variable-ratio transmission driven by the input shaft, and a simple epicyclic gear comprising a sun gear, planetary gears on a carrier, and an annulus, for combining the output of the continuously-variable-ratio transmission with the output of a step-up or step-down gear connected to the input shaft, in which the output of the continuously-variable-ratio transmission is connected in positive 1:1 driving relationship with one part of the epicyclic gear, the input shaft is connected via a step-up or step-down gear with another part of the epicyclic gear, and the output of the transmission system includes a gear which is connectable by a first clutch to the third part of the epicyclic gear and by a second clutch to the output of the continuously-variable-ratio transmission.

The use of the step-up or step-down gear from the 'direct' output enables a simple epicyclic gear to be used to combine the outputs, while making it possible to choose any desired ratio of combination, by choosing the step-up or step-down gear of the appropriate value, while the two clutches are selectable for alternative low and high regimes.

Advantageously, the output of the continuously-variable-ratio transmission is connected to the sun-gear and the step-up or step-down gear to the carrier. The output of the transmission system is then taken from the annulus.

A transmission system constructed in accordance with the invention will now be described, by way of example, with reference to the accompanying drawings, in which:

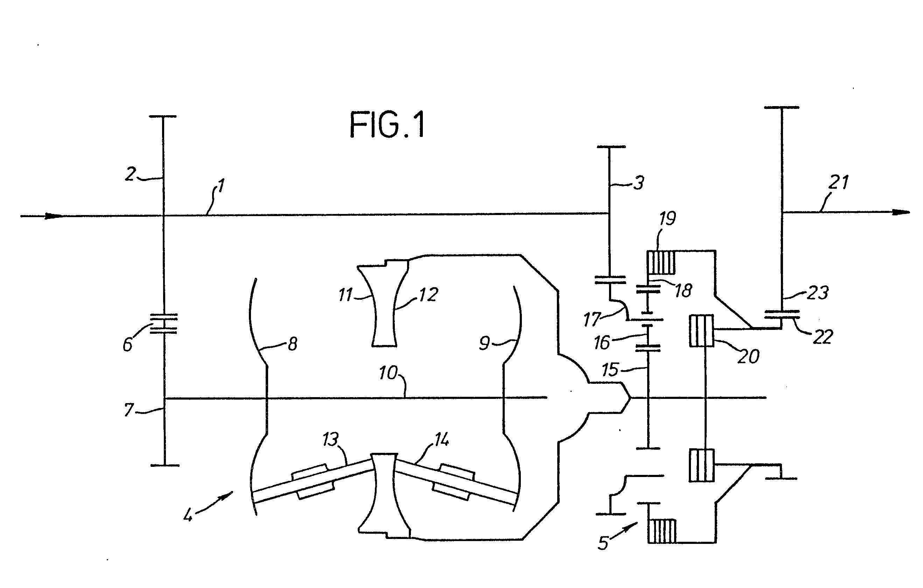

Figure 1 is a schematic drawing of the transmission system;

Figure 2 is a schematic drawing of the transmission system showing the parts which are operative when the system is is low regime; and

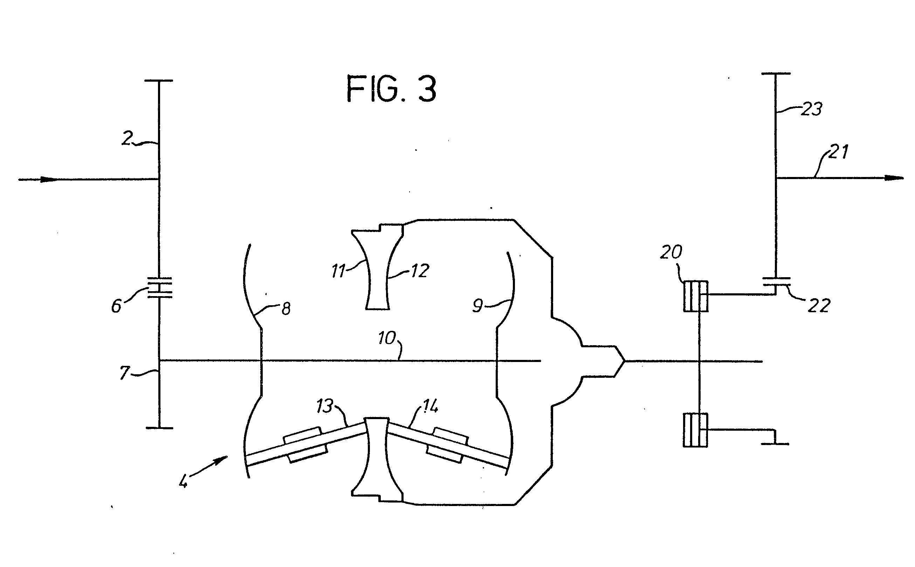

Figure 3 is a schematic drawing of the transmission system showing the parts which are operative when the system is in high regime.

Referring to the drawings, the transmission system is intended to be powered by a diesel engine (not shown) which is connected to an input shaft 1. The input shaft 1 has two take-offs, first via a gear 2 and second via a gear 3, the first providing an 'indirect' output via continuously-variable-ratio transmission indicated generally by the reference numeral 4 and the second providing a 'direct' output. The outputs are combined by a simple epicyclic gear indicated generally by the reference numeral 5. The output of the transmission system is taken from one part of the epicyclic gear in the case of low regime and another part in the case of high regime.

The gear 2 drives the continuously-variable-ratio transmission 4 via an idler 6 for reversing the sense of rotation and a gear 7, the gears 2 and 7 providing a step-up of one and a half. The continuously-variable-ratio transmission 4 consists of toroidal races 8 and 9 fixed to shaft 10 which drive toroidal races 11 and 12 via rollers 13, 14 (diameter 5½ inches). The rollers 13, 14 swing about their axes to change the ratio of the transmission between the races 8, 9 and 11, 12. Other rollers are present but are not shown in the drawing. A more detailed description of this kind of transmission is given in the American Society of Motor Engineers paper referred to in the opening paragraphs of this specification.

The simple epicyclic gear 7 consists of a sun-gear 15, planets 16 and an annulus 18. The output of the continuously-variable-ratio transmission is taken from the outer circumference of the races 11, 12 and feeds directly into the sun-gear 15. The input shaft 1 is connected to the carrier 17 of the planets 16 via gear 3 which provides a step-down of around a half.

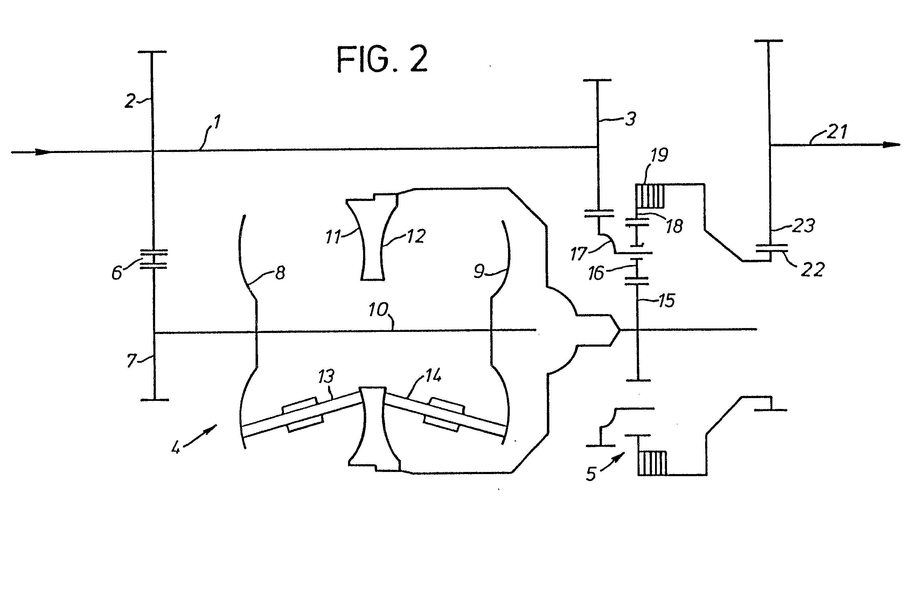

In the low regime, clutch 19 is engaged and clutch 20 disengaged (Figure 2): the annulus 18 thus drives output shaft 21 via gears 22 and 23. The sun gear 15 is driven in the same direction as the carrier 17 (because the continuously-variable-ratio transmission 4 reverses the sense of rotation but this is cancelled by the idler 6) and, at a certain ratio, the annulus is stationary and geared neutral is produced. At ratios above and below this value of the continuously variable-ratio transmission 4, reverse and low speed forward ratios of the overall transmission system is produced.

In the high regime, the annulus 18 is free, and output is taken directly from the sun-gear 15 and the gears 22 and 23.

At the lowest ratio of the highest regime, the sun-gear 15 rotates at the same speed and in the same direction as the annular 17 and consequently both clutches 19, 20 could be engaged without damaging the transmission system. Consequently gear-changing is synchronous and there is no de-clutching as in a conventional layshaft gearbox.

An advantage of the arrangement described above is that a simple epicyclic gear is used to combine the outputs in the low regime to produce geared neutral, as compared with more complicated compound epicyclic gears in known systems. The desired speed of the input shaft is 2000 to 3000 rpm for which the diesel engine operates at peak efficiency.

The continuously-variable-ratio transmission 4 is essentially a low torque high speed device and operates best at a faster speed. The use of the simple epicyclic gear to combine these fixed speed range inputs is made possible by the use of the step-down carrier drive gear 3 which can be chosen to produce any desired degree of step-down.

## Claims

1. A transmission system which comprises an input shaft (1) for connection to an engine output shaft (21), a rolling traction toroidal race continuously-variable-ratio transmission (4) driven by the input shaft, and a simple epicyclic gear (5) comprising a sun gear (15), planetary gears (16) on a carrier (17) and an annulus (18), for combining the output of the continuously-variable-ratio transmission with the output of the step-up or step-down gear (3) connected to the input shaft, whereby the output of the continuously-variable-ratio transmission is connected in 1:1 driving relationship with one part of the epicyclic gear (5), and the input shaft is connected via a step-up or step-down gear (3) with another part of the epicyclic gear, characterized in that said 1:1 driving relationship is positive and the output of the transmission system includes a gear (23) which is connectable by a first clutch (19) to the third part of the epicyclic gear and by a second clutch (20) to the output of the continuously-variable-ratio transmission.

2. A transmission system as claimed in claim 1 wherein the output of the continuously-variable-ratio transmission is connected to the sun-gear (15) the step-up or step-down gear (3) to the carrier (17), and the output gear (23) is connectable to the annulus (18).

3. A transmission system as claimed in claim 1 or 2, wherein the input shaft (1) is connected to a diesel engine.

4. A vehicle including an engine and a transmission, as claimed in any one of claims 1 to 3, whose input is connected to the engine output.

## Patentansprüche

1. (Kraft-) Übertragungssystem mit einer Eingangswelle (1) zur Verbindung mit einer Antriebseinheit-Ausgangswelle (21) einem von der Eingangswelle (1) angetriebenen, stufenlos variablen Getriebe (4) mit toroidförmigen Laufflächen und Kraftübertragung durch Rollkörper, und mit einem einfachen Planetengetriebe (5), das eine Sonnenrad (15), Planetenräder (16) an einem Träger (17) sowie ein Hohlrad (18) aufweist, zum Kombinieren des Ausgangs des stufenlos variablen Getriebes mit dem Ausgang eines Übersetzungs- oder Untersetzungsgetriebes (3), das mit der Eingangswelle verbunden ist, wobei der Ausgang des stufenlos variablen Getriebes in einem Antriebsverhältnis von 1:1 mit einem Teil des Planetengetriebes (5) verbunden ist und die Eingangswelle über ein Übersetzungs- oder Untersetzungsgetriebe (3) mit einem weiteren Teil des Planetengetriebes verbunden ist, dadurch gekennzeichnet, daß das Antriebsverhältnis von 1:1 positiv ist und daß der Ausgang des Übertragungssystems eine Trieb (23) beinhaltet, der durch eine erste Kupplung (19) mit dem dritten Teil des Planetengetriebes und durch eine zweite Kupplung (20) mit dem Ausgang des stufenlos variablen Getriebes verbindbar ist.

2. Übertragungssystem nach Anspruch 1, dadurch gekennzeichnet, daß der Ausgang des stufenlos variablen Getriebes mit dem Sonnenrad (15) und das Übersetzungs- oder Untersetzungsgetriebe (3) mit dem Träger (17) verbunden ist und das Ausgangszahnrad (23) mit dem Hohlrad (18) verbindbar ist.

3. Übertragungssystem nach Anspruch 1 oder 2, dadurch gekennzeichnet, daß die Eingangswelle (1) mit einem Dieselmotor verbunden ist.

4. Fahrzeug mit einem Motor und einem Übertragungssystem nach einem der Ansprüche 1 bis 3, dessen Eingang mit dem Motorausgang verbunden ist.

## Revendications

1. Système de transmission comprenant un arbre (1) d'entrée à accoupler à un arbre (21) de sortie du moteur, une transmission (4) à rapport constamment variable du type traction à gorges toriques de roulement et entraînée par l'arbre d'entrée, et un simple train épicycloïdal (5) constitué d'un pignon planétaire (15), de pignons satellites (16) montés sur un porte-satellites (17) et d'une couronne (18), afin de combiner la sortie de la transmission à rapport constamment variable avec la sortie d'un engrenage multiplicateur ou réducteur (3) solidaire de l'arbre d'entrée, ce qui permet d'accoupler la sortie de la transmission à rapport constamment variable dans un rapport d'entraînement 1:1 avec une partie du train épicycloïdal, caractérisé en ce que ce rapport d'entraînement 1:1 est positif et en ce que la sortie du système de transmission comprend un engrenage (23) qui peut être accouplé par un premier embrayage (19) à la troisième partie du train épicycloïdal et par un deuxième embrayage (20) à la sortie de la transmission à rapport constamment variable.

2. Système de transmission suivant la revendication 1, dans lequel la sortie de la transmission à rapport constamment variable est accouplé au pignon planétaire (15) et l'engrenage multiplicateur ou réducteur (3) au porte-satellites (17), et l'engrenage (23) de sortie peut être accouplé à la couronne (18).

3. Système de transmission suivant l'une des revendications 1 ou 2, dans lequel l'arbre (1) d'entrée est accouplé à un moteur diesel.

4. Véhicule comprenant un moteur et une transmission suivant l'une quelconque des revendications 1 à 3, dont l'entrée est accouplée à la sortie du moteur.

# FIG.1

0078 124

# FIG. 2

0 078 124

FIG. 3

0078124